# EUROPÄISCHE PATENTSCHRIFT

(11) **EP 4 436 839 B1**
(45) Veröffentlichungstag und Bekanntmachung des Hinweises auf die Patenterteilung: **03.09.2025**
(21) Anmeldenummer: 22789601.6
(22) Anmeldetag: 28.09.2022
(51) Int. Cl.: B60R 19/52, B60K 11/08

(54) **VERKLEIDUNGSVORRICHTUNG FÜR EIN KRAFTFAHRZEUG SOWIE KRAFTFAHRZEUG MIT EINER DERARTIGEN VERKLEIDUNGSVORRICHTUNG**
TRIM DEVICE FOR A MOTOR VEHICLE AND MOTOR VEHICLE WITH SUCH A TRIM DEVICE
DISPOSITIF D'HABILLAGE POUR UN VÉHICULE AUTOMOBILE ET VÉHICULE AUTOMOBILE AVEC UN TEL DISPOSITIF D'HABILLAGE

(30) Priorität: 22.11.2021 DE 102021213106
(43) Veröffentlichungstag der Anmeldung: 02.10.2024
(73) Patentinhaber: Stellantis Auto SAS, 78300 Poissy (FR)
(72) Erfinder: SOEIRO, Fernando, 65428 Rüsselsheim am Main (DE); SINIZYN, Peter, 65428 Rüsselsheim am Main (DE); THANE, Eric, 65248 Rüsselsheim am Main (DE)
(74) Vertreter: BCIP
(86) Internationale Anmeldenummer: PCT/EP2022/077035
(87) Internationale Veröffentlichungsnummer: WO 2023/088598

(56) Entgegenhaltungen:
- EP-A1- 3 075 605
- EP-A1- 3 075 606
- DE-A1- 10 213 551
- FR-A1- 2 912 098

## Beschreibung

Die Erfindung betrifft eine Verkleidungsvorrichtung für ein Kraftfahrzeug sowie ein Kraftfahrzeug mit einer derartigen Verkleidungsvorrichtung.

Verkleidungsvorrichtungen für Kraftfahrzeuge sind in unterschiedlichen Ausführungsformen aus dem Stand der Technik bekannt. Diese können beispielsweise Verkleidungselemente umfassen, beispielsweise einen Fahrzeuggrill oder einen Einlauf für ein Außenluftbenötigendes Fahrzeugaggregat, die mit ihren äußeren Oberflächen jeweils eine Außenfläche des Kraftfahrzeugs bilden.

Bei den bekannten Verkleidungsvorrichtungen tritt über Öffnungen in den Verkleidungselementen Luft hindurch und wird einem Fahrzeugaggregat zugeführt oder gelangt in Richtung Kraftfahrzeug. Bei sehr niedrigen Umgebungstemperaturen kann das Zuführen von sehr kalter Umgebungsluft in Richtung Fahrzeug, insbesondere in Richtung Fahrzeugaggregat, einen effizienten Betrieb des Fahrzeugaggregats zumindest erschweren, wenn dieser seine optimale Arbeitstemperatur verspätet oder nicht erreichen kann.

Um bei besonders niedrigen Umgebungstemperaturen einen Zustrom von kalter Luft zu verhindern oder zumindest zu reduzieren, ist es bekannt, die Verkleidungselemente ganz oder teilweise mit einem Abdeckelement zu überdecken. Hierbei hat es sich als nachteilig herausgestellt, dass diese zeitaufwändig und umständlich mit einen Werkzeug wieder vom Verkleidungselement lösbar sind, wenn die Umgebungstemperaturen ausreichend hoch sind.

EP 3 075 606 A1 betrifft eine Außenverkleidungseinrichtung für ein Kraftfahrzeug, das einen Lufteinlass-Grill mit einer Öffnung, ein am Grill fixiertes Gehäuse zur Aufnahme eines Außenelements sowie ein bewegbares Versperr-Element zum Versperren der Öffnung umfasst.

Eine Aufgabe eines Ausführungsbeispiels der Erfindung ist, eine Verkleidungsvorrichtung für ein Kraftfahrzeug sowie ein Kraftfahrzeug mit einer derartigen Verkleidungsvorrichtung vorzuschlagen, bei der ein Anordnen und wieder Entfernen eines Abdeckelements an einem Verkleidungselement erleichtert ist.

Diese Aufgabe wird gelöst durch eine Verkleidungsvorrichtung für ein Kraftfahrzeug, mit mindestens einem an einer Tragstruktur des Kraftfahrzeugs festgelegten Verkleidungselement, wie Fahrzeuggrill, das mit seiner äußeren Oberfläche eine Außenfläche des Kraftfahrzeugs bildet und das zumindest bereichsweise mindestens eine durchgehende Öffnung umfasst, durch die Luft von außen durch das Verkleidungselement in Richtung Kraftfahrzeug strömbar ist, und mit mindestens einer Abdeckeinheit, die mindestens ein Abdeckelement umfasst, das eine in Gänze oder zumindest überwiegend geschlossene Abdeckfläche aufweist und das an der äußeren Oberfläche des Verkleidungselements anlegbar ist und die mindestens ein am Abdeckelement festlegbares oder festgelegtes Festlegemittel umfasst, welches in einer gefügten Endposition einen Hintergriff bezüglich einer Fügerichtung mit mindestens einem an die mindestens eine durchgehende Öffnung des Verkleidungselements angrenzenden Anlageabschnitt des Verkleidungselements bildet und welches mindestens einen Betätigungsabschnitt umfasst, der von außen zugänglich ist und durch dessen manuellen Betätigens das Festlegemittel quer oder schräg zur Fügerichtung manuell bewegbar und außer Eingriff mit dem Anlageabschnitt bringbar ist. Die Abdeckeinheit umfasst mindestens ein Rippenmittel, das auf der dem Verkleidungselement zugewandten Seite am Abdeckelement und am Festlegemittel festgelegt ist.

Dadurch, dass die Abdeckeinheit ein Abdeckelement mit überwiegend geschlossener Abdeckfläche umfasst, kann durch Anordnen des Abdeckelements die mindestens eine Öffnung in dem Verkleidungselement im angeordneten Zustand der Abdeckeinheit verschlossen werden.

Dadurch, dass die Abdeckeinheit ein Festlegemittel umfasst, dass in einer gefügten Endposition einen Hintergriff bezüglich der Fügerichtung mit dem Anlageabschnitt der Öffnung bildet, ist das Abdeckelement auf einfache Weise und werkzeuglos an dem Verkleidungselement anordenbar.

Dadurch, dass das Festlegemittel einen von außen zugänglichen Betätigungsabschnitt umfasst, durch den das Festlegemittel außer Eingriff mit dem Anlageabschnitt bringbar ist, ist die Abdeckeinheit auf einfache Weise wieder vom Verkleidungselement entfernbar.

Durch das Rippenmittel können durch das Festlegemittel erhöhte Kräfte aufgenommen werden, insbesondere bei Betrieb des Kraftfahrzeugs auftretende wiederholte Lastwechsel. Dadurch kann die Lebensdauer der Abdeckeinheit erhöht werden. Bei dem Verkleidungselement kann es sich beispielsweise um einen Fahrzeuggrill eines Kraftfahrzeugs handeln, der im Bereich einer Fahrzeugfront des Kraftfahrzeugs angeordnet ist. Darüber hinaus kann das Verkleidungselement auch jegliches luftführende Bauteil des Kraftfahrzeugs umfassen, das eine Außenfläche des Kraftfahrzeugs bildet, beispielsweise einen Einlauf oder Dergleichen.

Das Festlegemittel kann grundsätzlich beliebig an oder mit dem Abdeckelement verbunden sein. Die Verkleidungsvorrichtung lässt sich kompakt ausbilden, wenn das Festlegemittel auf einer dem Verkleidungselement zugewandte Seite an dem Abdeckelement angeordnet ist und wenn das Abdeckelement im Bereich des Festlegemittels eine Aussparung umfasst, durch die der Betätigungsabschnitt durch das Abdeckelement hindurch von außen zugänglich ist.

Wenn das Abdeckelement im Bereich des Festlegemittels eine Aussparung umfasst, ist der Betätigungsabschnitt des Festlegemittels auch dann erreichbar, wenn das Festlegemittel auf der dem Verkleidungselement zugewandten Seite des Abdeckelements angeordnet ist.

Das Festlegemittel kann grundsätzlich beliebig ausgebildet sein, sofern es der technischen Funktion nachkommt, in der gefügten Endposition einen Hintergriff bezüglich der Fügerichtung mit dem Anlageabschnitt des Verkleidungselements zu bilden. Das Festlegemittel lässt sich einfach und kostengünstig herstellen, wenn das Festlegemittel in Fügerichtung seine längste Erstreckung umfasst und/oder wenn das Festlegemittel ein einem freien Ende einen hakenförmigen Vorsprung umfasst, der in der gefügten Endposition den Hintergriff bildend am Anlageabschnitt anliegt.

Um zu gewährleisten, dass beim Fügen der Abdeckeinheit das Festlegemittel mit dem Anlageabschnitt des Verkleidungselements einen Hintergriff bildet, ist bei einer Weiterbildung der Verkleidungsvorrichtung vorgesehen, dass die Abdeckeinheit mindestens ein Spannelement umfasst, durch das das Festlegemittel ein die Hintergriffstellung spannbar ist.

Hierdurch ist gewährleistet, dass das Festlegemittel automatisch in die Hintergriffstellung überführt wird.

Bei einer Weiterbildung letztgenannter Ausführungsform erweist es sich als vorteilhaft, wenn das Festlegemittel zumindest beim Fügen entlang der Fügerichtung quer oder schräg zur Fügerichtung elastisch verdrängbar ist und/oder wenn das Festlegemittel ein elastisch verdrängbares Material umfasst, wobei Spannmittel und Festlegemittel ein gemeinsames Bauteil umfassen oder wenn das Spannmittel ein vom Festlegemittel separates oder separierbares Bauteil umfasst.

Wenn das Festlegemittel ein elastisch verdrängbares Material umfasst, kann es beim Fügen in Fügerichtung zunächst quer zur Fügerichtung verdrängt werden, um in der gefügten Endposition mit dem Anlageabschnitt des Verkleidungselements zu verrasten. Solchenfalls ist die Verkleidungsvorrichtung bauteilreduziert ausbildbar.

Wenn das Spannmittel ein vom Festlegemittel separates oder separierbares Bauteil umfasst, kann auf ein beliebiges Material und einen beliebigen Mechanismus, mit dem das Festlegemittel am Abdeckelement anordenbar ist, zurückgegriffen werden.

Beispielsweise können Abdeckelement und Festlegemittel als separate oder voneinander separierbare Bauteile ausgebildet sein. Solchenfalls kann das Festlegemittel über mindestens ein Lagermittel am Abdeckelement angeordnet sein. Solchenfalls erweist es sich als vorteilhaft, wenn das Spannmittel ein separierbares oder separates Bauteil umfasst.

Wenn Festlegemittel und Abdeckelement ein gemeinsames Bauteil bilden, erweist es sich als vorteilhaft, wenn das Spannmittel durch das Festlegemittel gebildet ist.

Um ein Entfernen der Abdeckeinheit vom Verkleidungselement zu erleichtern, erweist es sich als vorteilhaft, wenn die Abdeckeinheit ein zum Festlegemittel quer zur Fügerichtung beabstandetes Greifmittel umfasst, das auf einer dem Verkleidungselement abgewandten Seite angeordnet ist und das zum manuellen Entfernen des Abdeckelements von dem Verkleidungselement entgegen der Fügerichtung manuell greifbar ist.

Solchenfalls kann beim Fügen sowie beim Entfernen des Abdeckelements an dem Verkleidungselement das Abdeckelement an mindestens zwei Stellen gegriffen werden, nämlich am Greifmittel sowie am Betätigungsabschnitt, wodurch ein Fügen und wieder Entfernen des Abdeckelements erleichtert ist.

Das Greifmittel kann beliebig ausgebildet sein, sofern es der Funktion nachkommt, manuell gegriffen zu werden. Solchenfalls erweist es sich als vorteilhaft, wenn das Greifmittel eine Erhebung am Abdeckelement und/oder eine, insbesondere durchgehende, Ausnehmung im Abdeckelement umfasst.

Wenn das Greifmittel eine Erhebung umfasst, kann diese beispielsweise knopf-, pilz- oder ösenartig ausgebildet sein.

Bei einer Weiterbildung der Verkleidungsvorrichtung ist vorgesehen, dass der Betätigungsabschnitt eine quer oder schräg zur Fügerichtung zurückspringende Vertiefung umfasst, die bis zum Abdeckelement erstreckt ist und/oder dass die Ausnehmung im Abdeckelement und/oder die Vertiefung quer zur Fügerichtung einen Querschnitt umfasst, der mindestens 1 cm², insbesondere mindestens 4 cm², insbesondere mindestens 9 cm² umfasst.

Wenn der Betätigungsabschnitt eine quer oder schräg zur Fügerichtung zurückspringende Vertiefung umfasst, ist der Betätigungsabschnitt von außen leicht durch ein Werkzeug oder durch einen Finger einer Bedienperson zugänglich. Wenn die Ausnehmung nur Abdeckelement und/oder die Vertiefung quer zur Fügerichtung einen Querschnitt umfasst, der mindestens 1 cm², mindestens 4 cm², mindestens 9 cm² umfasst, ist zum einen die Zugänglichkeit für ein Werkzeug oder einen Finger einer Bedienperson ermöglicht und zudem einer verhältnismäßig kleinen Öffnung angeboten.

Bei einer Weiterbildung letztgenannter Ausführungsform erweist es sich als vorteilhaft, wenn das Rippenmittel parallel zu einer Kippachse des Festlegemittels verläuft, um die das Festlegemittel beim manuellen Betätigen des Festlegemittels quer oder schräg zur Fügerichtung kippt oder dreht, und/oder wenn das Rippenmittel in Fügerichtung rippenartig erstreckt ist.

Solchenfalls verstärkt das Rippenmittel das Festlegemittel, behindert jedoch nicht das Überführen des Festlegemittels quer zur Fügerichtung beim Lösen der Abdeckeinheit von dem Verkleidungselement.

Grundsätzlich ist es denkbar, dass die einzelnen Komponenten der Abdeckeinheit aus separaten Bauteilen gebildet sind. Die Verkleidungsvorrichtung lässt sich bauteilreduziert ausbilden, wenn das Abdeckelement, das Spannelement, das Rippenmittel und das Festlegemittel ein gemeinsames einstückiges Bauteil bilden, insbesondere ein Spritzgussteil.

Darüber hinaus erweist es sich als vorteilhaft, wenn die Abdeckeinheit im Bereich des Übergangs von Abdeckelement auf Festlegemittel eine Materialverdickung und/oder ein Verstärkungsmittel umfasst.

Insbesondere, wenn Abdeckelement und Festlegemittel ein gemeinsames Bauteil umfassen, kann durch das Vorsehen einer Materialverdickung am Übergang von Abdeckelement auf Festlegemittel die Gefahr einer Beschädigung des Festlegemittels beim Betätigen reduziert werden.

Darüber hinaus sind Ausführungsformen der Verkleidungsvorrichtung denkbar, bei denen die Abdeckeinheit die äußere Oberfläche des Verkleidungselements mit einem einzigen Abdeckelement oder mit mindestens zwei Abdeckelementen in Gänze oder abschnittsweise überdeckt.

Wenn die Abdeckeinheit ein einziges Abdeckelement umfasst, kann die Verkleidungsvorrichtung kompakt und bauteilreduziert ausgebildet werden. Wenn die Abdeckeinheit mindestens zwei Abdeckelemente umfasst, kann ein Zustrom von äußerer Luft über das Verkleidungselement erleichtert eingestellt werden.

Um die Stabilität eines Systems aus mehreren Abdeckelementen bestehenden Abdeckeinheiten zu erhöhen, ist bei einer Weiterbildung letztgenannter Ausführungsform vorgesehen, dass die Abdeckeinheit mindestens ein Koppelmittel umfasst, durch das mindestens zwei aneinander angrenzende Abdeckelemente der mindestens zwei Abdeckelement aneinander festlegbar sind.

Schließlich wird die Aufgabe gelöst durch ein Kraftfahrzeug mit einer Tragstruktur, mit mindestens einem an der Tragstruktur festgelegten Verkleidungselement und mit mindestens einer Verkleidungsvorrichtung mit mindestens einem der zuvor genannten Merkmale. Weitere Merkmale, Einzelheiten und Vorteile der Erfindung ergeben sich aus den beigefügten Patentansprüchen, aus der zeichnerischen Darstellung und nachfolgenden Beschreibung zweier bevorzugter Ausführungsformen der Verkleidungsvorrichtung.

In der Zeichnung zeigt:
- Figur 1.: Eine Draufsicht auf ein Ausführungsbeispiel der Verkleidungsvorrichtung;
- Figur 2.: Eine geschnittene perspektivische Detailansicht einer am Verkleidungselement angeordneten Abdeckeinheit in der gefügten Endposition;
- Figur 3.: Eine geschnittene perspektivische Ansicht des Ausführungsbeispiels gemäß Figur 2 mit angedeuteter manueller Betätigung;
- Figur 4.: Eine Vorderansicht auf einen Bereich der Abdeckeinheit;
- Figur 5.: Eine Hinteransicht auf die Ansicht gemäß Figur 4;
- Figur 6.: Eine

Vorderansicht auf ein zweites Ausführungsbeispiel der Verkleidungsvorrichtung mit einer Abdeckeinheit mit mehreren Abdeckelementen.

Die Figuren zeigen zwei Ausführungsbeispiele einer insgesamt mit dem Bezugszeichen 2 versehenen Verkleidungsvorrichtung für ein Kraftfahrzeug 4. Die Verkleidungsvorrichtung umfasst ein Verkleidungselement 6, das an einer Tragstruktur 8 des Kraftfahrzeugs 4 festgelegt ist. Das Verkleidungselement 6 bildet eine äußere Oberfläche des Kraftfahrzeugs 4. Das Verkleidungselement 6 umfasst eine Vielzahl von durchgehenden Öffnungen 10, durch die Luft von außen durch das Verkleidungselement 6 in Richtung Kraftfahrzeug 4 strömbar ist.

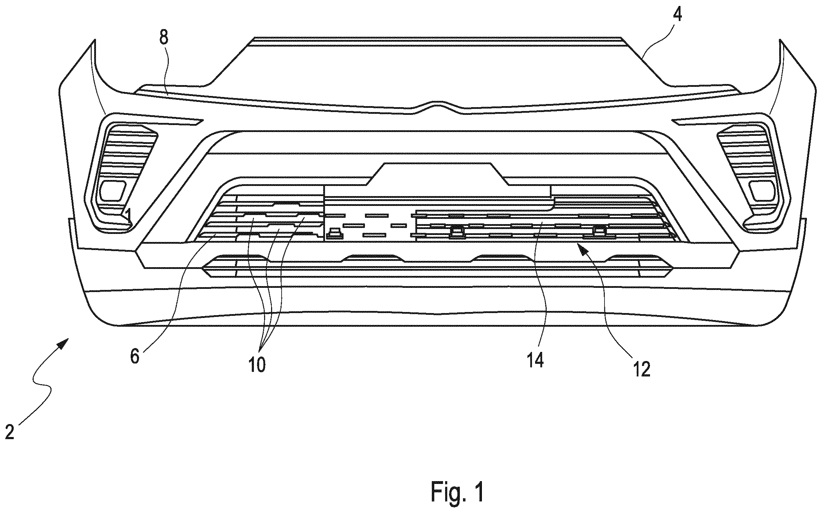

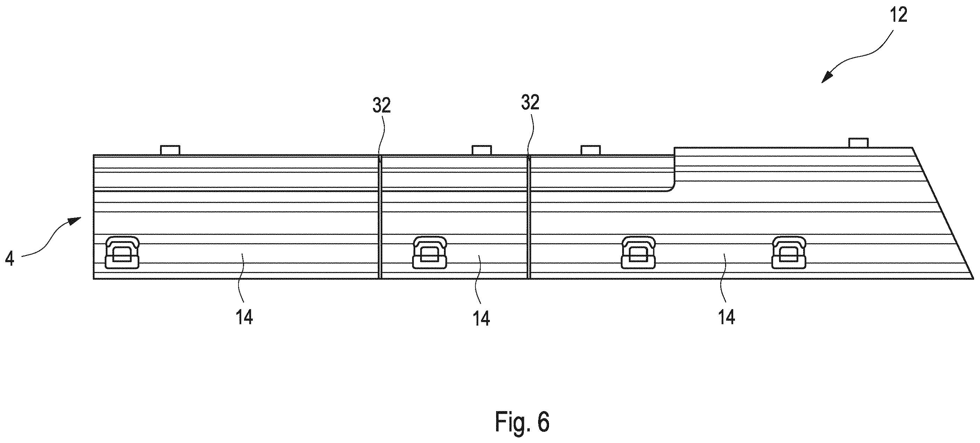

Die Verkleidungsvorrichtung 2 umfasst zudem eine Abdeckeinheit 12. Die Abdeckeinheit 12 umfasst bei dem in den Figuren 1 bis 5 gezeigten Ausführungsbeispiel ein einziges Abdeckelement 14 und bei dem in Figur 6 gezeigten Ausführungsbeispiel mehrere Abdeckelemente 14. Das Abdeckelement 14 umfasst eine überwiegend geschlossene Abdeckfläche und ist an der äußeren Oberfläche des Verkleidungselement 6 anlegbar. An dem Abdeckelement 14 ist ein Festlegemittel 16 der Abdeckeinheit 12 festgelegt, welches in einer gefügten Endposition einen Hintergriff bezüglich einer Fügerichtung 18 mit einem die durchgehende Öffnung 10 des Verkleidungselements 6 angrenzenden Anlageabschnitt 20 des Verkleidungselements 6 bildet. Darüber hinaus umfasst das Festlegemittel 16 einen Betätigungsabschnitt 22, der von außen zugänglich ist und durch dessen manuellen Betätigens des Festlegemittels 16 quer oder schräg zur Fügerichtung 18 bewegbar und außer Eingriff mit dem Anlageabschnitt 20 bringbar ist.

In den gezeigten Ausführungsbeispielen der Verkleidungsvorrichtung 2 ist gemein, dass die Festlegemittel 16 am Abdeckelement 14 auf einer dem Verkleidungselement 6 zugewandten Seite angeordnet sind. Um das Festlegemittel 16 von außen zugänglich zu machen, umfasst das Abdeckelement 14 im Bereich des Festlegemittels 16 eine Aussparung 24.

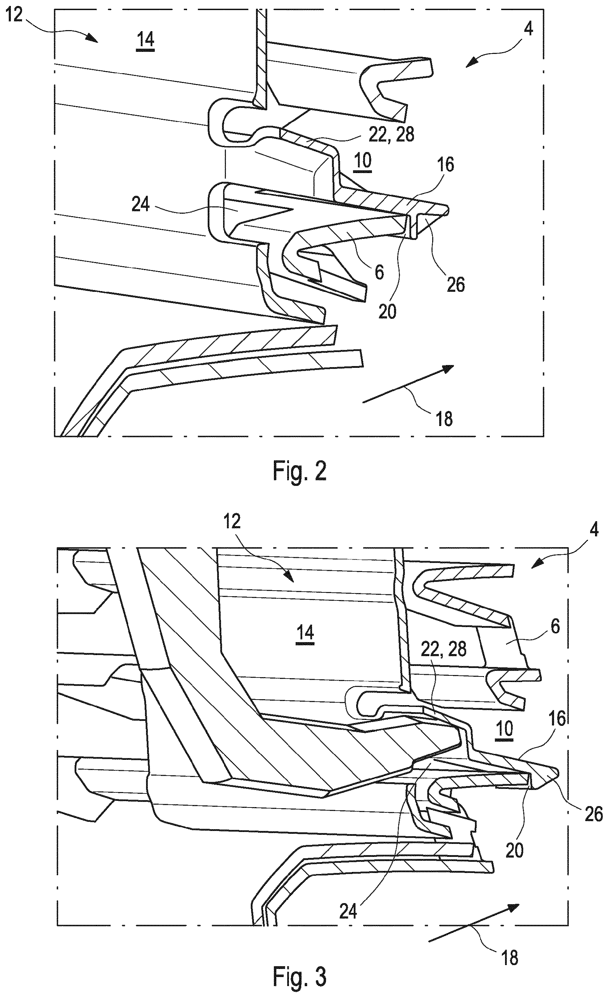

Mit Blick in die Figuren 2 bis 5 ist ersichtlich, dass das Festlegemittel 16 in Fügerichtung 18 seine längste Erstreckung umfasst und an einem freien Ende einen hakenartigen Vorsprung 26 umfasst, der in der gefügten Endposition den Hintergriff mit dem Anlageabschnitt 20 des Verkleidungselements 6 bildet.

Der Betätigungsabschnitt 22 umfasst eine zurückspringende Vertiefung 28, in die ein Werkzeug oder ein Finger eines Bedieners eingreifbar ist.

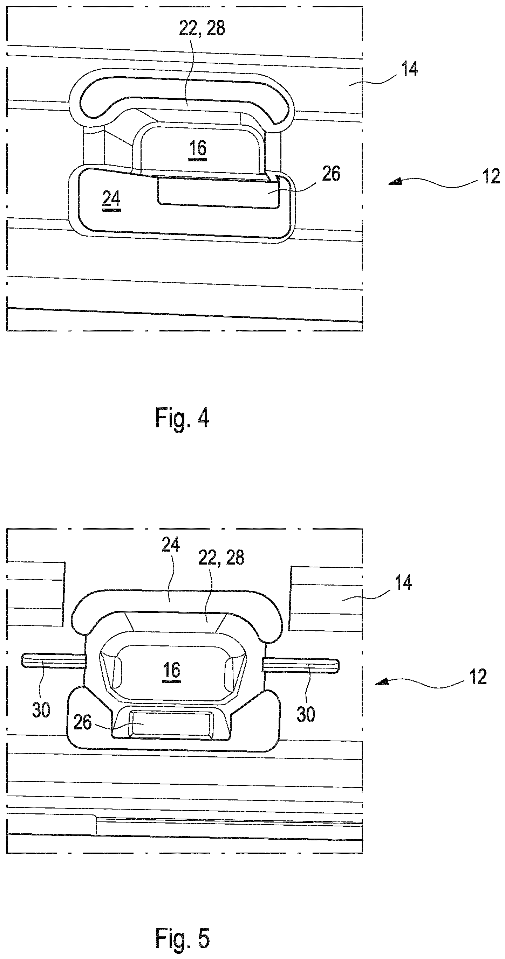

Aus den Figuren 4 und 5 ist ersichtlich, dass das Abdeckelement 14 und das Festlegemittel 16 ein gemeinsames einstückiges Bauteil, insbesondere Spritzgussbauteil, bilden. Zum Erhöhen der Stabilität der Abdeckeinheit 12 ist, wie in Figur 5 ersichtlich, ein Rippenmittel 30 vorgesehen, das parallel zu einer Kippachse des Festlegemittels 16, um die das Festlegemittel 16 beim manuellen Betätigen des Festlegemittels 16 quer oder schräg zur Fügerichtung 18 kippt oder dreht, erstreckt ist sowie sich in Fügerichtung 18 rippenartig erstreckt.

Figur 6 zeigt ein zweites Ausführungsbeispiel der Verkleidungsvorrichtung 2, bei dem die Abdeckeinheit 12 mehrere Abdeckelemente 14 umfasst. Die Abdeckelemente 14 sind durch Koppelmittel 32 aneinander festgelegt.

Anhand der Figuren 2 und 3 wird die Funktionsweise der Verkleidungsvorrichtung 2 näher beschrieben:
Beim Fügen der Abdeckeinheit 12 am Verkleidungselement 6 wird das Abdeckelement 14 mit dem am Abdeckelement 14 festgelegten Festlegemittel 16 entlang der Fügerichtung 18 durch eine der Öffnungen 10 des Verkleidungselements 6 geschoben. Hierbei wird das Festlegemittel 16 quer zur Fügerichtung 18 verdrängt und verrastet in der gefügten Endposition mit dem Anlageabschnitt 20 des Verkleidungselements 6.

Zum Lösen der Abdeckeinheit 12 vom Verkleidungselement 6 ist ein Werkzeug oder ein Finger über die Aussparung 24 im Abdeckelement 14 in die als zurückspringende Vertiefung 28 ausgebildeten Betätigungsabschnitt 22 einführbar und durch Betätigen quer oder schräg zur Fügerichtung 18 der hakenförmige Vorsprung 26 des Festlegemittels 16 außer Eingriff mit dem Anlageabschnitt 20 des Verkleidungselements 6 bringbar. Hierdurch lässt sich die Abdeckeinheit 12 auf einfache Weise wieder vom Verkleidungselement entfernen.

Die in der vorstehenden Beschreibung, in den Ansprüchen sowie in der Zeichnung offenbarten Merkmale der Erfindung, können sowohl einzeln, als auch in jeder beliebigen Kombination bei der Verwirklichung der Erfindung in ihren verschiedenen Ausführungsformen wesentlich sein.

### Bezugszeichenliste

- 2: Verkleidungsvorrichtung
- 4: Kraftfahrzeug
- 6: Verkleidungselement
- 8: Tragstruktur
- 10: Öffnung
- 12: Abdeckeinheit
- 14: Abdeckelement
- 16: Festlegemittel
- 18: Fügerichtung
- 20: Anlageabschnitt
- 22: Betätigungsabschnitt
- 24: Aussparung
- 26: Vorsprung
- 28: Vertiefung
- 30: Rippenmittel
- 32: Koppelmittel

### Bezugszeichenliste

- 2: Verkleidungsvorrichtung
- 4: Kraftfahrzeug
- 6: Verkleidungselement
- 8: Tragstruktur
- 10: Öffnung
- 12: Abdeckeinheit
- 14: Abdeckelement
- 16: Festlegemittel
- 18: Fügerichtung
- 20: Anlageabschnitt
- 22: Betätigungsabschnitt
- 24: Aussparung
- 26: Vorsprung
- 28: Vertiefung
- 30: Rippenmittel
- 32: Koppelmittel

## Patentansprüche

1. Verkleidungsvorrichtung (2) für ein Kraftfahrzeug (4), mit mindestens einem an einer Tragstruktur (8) des Kraftfahrzeugs (4) festgelegten Verkleidungselement (6), wie Fahrzeuggrill, das mit seiner äußeren Oberfläche eine Außenfläche des Kraftfahrzeugs (4) bildet und das zumindest bereichsweise mindestens eine durchgehende Öffnung (10) umfasst, durch die Luft von außen durch das Verkleidungselement (6) in Richtung Kraftfahrzeug (4) strömbar ist, und mit mindestens einer Abdeckeinheit (12), die mindestens ein Abdeckelement (14) umfasst, das eine in Gänze oder zumindest überwiegend geschlossene Abdeckfläche aufweist und das an der äußeren Oberfläche des Verkleidungselements (6) anlegbar ist und die mindestens ein am Abdeckelement (14) festlegbares oder festgelegtes Festlegemittel (16) umfasst, welches in einer gefügten Endposition einen Hintergriff bezüglich einer Fügerichtung (18) mit mindestens einem an die mindestens eine durchgehende Öffnung (10) des Verkleidungselements (6) angrenzenden Anlageabschnitt (20) des Verkleidungselements (6) bildet und welches mindestens einen Betätigungsabschnitt (22) umfasst, der von außen zugänglich ist und durch dessen manuellen Betätigens das Festlegemittel (16) quer oder schräg zur Fügerichtung (18) manuell bewegbar und außer Eingriff mit dem Anlageabschnitt (20) bringbar ist, **dadurch gekennzeichnet, dass** die Abdeckeinheit (12) mindestens ein Rippenmittel (30) umfasst, das auf der dem Verkleidungselement (6) zugewandten Seite am Abdeckelement (14) und am Festlegemittel (16) festgelegt ist..

2. Verkleidungsvorrichtung (2) nach Anspruch 1, **dadurch gekennzeichnet, dass** das Festlegemittel (16) auf einer dem Verkleidungselement (6) zugewandten Seite an dem Abdeckelement (14) angeordnet ist und dass das Abdeckelement (14) im Bereich des Festlegemittels (16) eine Aussparung (24) umfasst, durch die der Betätigungsabschnitt (22) durch das Abdeckelement (14) hindurch von außen zugänglich ist.

3. Verkleidungsvorrichtung (2) nach Anspruch 1 oder 2, **dadurch gekennzeichnet, dass** das Festlegemittel (16) in Fügerichtung (18) seine längste Erstreckung umfasst und/oder dass das Festlegemittel (16) ein einem freien Ende einen hakenförmigen Vorsprung (26) umfasst, der in der gefügten Endposition den Hintergriff bildend am Anlageabschnitt (20) anliegt.

4. Verkleidungsvorrichtung (2) nach einem der vorhergehenden Ansprüche, **dadurch gekennzeichnet, dass** die Abdeckeinheit (12) mindestens ein Spannelement umfasst, durch das das Festlegemittel (16) in die Hintergriffstellung spannbar ist.

5. Verkleidungsvorrichtung (2) nach Anspruch 4, **dadurch gekennzeichnet, dass** das Festlegemittel (16) zumindest beim Fügen entlang der Fügerichtung (18) quer oder schräg zur Fügerichtung (18) elastisch verdrängbar ist und/oder dass das Festlegemittel (16) ein elastisch verdrängbares Material umfasst, wobei Spannmittel und Festlegemittel (16) ein gemeinsames Bauteil umfassen oder dass das Spannmittel ein vom Festlegemittel (16) separates oder separierbares Bauteil umfasst.

6. Verkleidungsvorrichtung (2) nach einem der vorhergehenden Ansprüche, **dadurch gekennzeichnet, dass** die Abdeckeinheit (12) ein zum Festlegemittel (16) quer zur Fügerichtung (18) beabstandetes Greifmittel umfasst, das auf einer dem Verkleidungselement (6) abgewandten Seite angeordnet ist und das zum manuellen Entfernen des Abdeckelements (14) von dem Verkleidungselement (6) entgegen der Fügerichtung (18) manuell greifbar ist.

7. Verkleidungsvorrichtung (2) nach Anspruch 6, **dadurch gekennzeichnet, dass** das Greifmittel eine Erhebung am Abdeckelement (14) und/oder eine, insbesondere durchgehende, Ausnehmung im Abdeckelement (14) umfasst.

8. Verkleidungsvorrichtung (2) nach einem der vorhergehenden Ansprüche, **dadurch gekennzeichnet, dass** der Betätigungsabschnitt (22) eine quer oder schräg zur Fügerichtung (16) zurückspringende Vertiefung (28) umfasst, die bis zum Abdeckelement (14) erstreckt ist und/oder dass die Ausnehmung im Abdeckelement (14) und/oder die Vertiefung (28) quer zur Fügerichtung (18) einen Querschnitt umfasst, der mindestens 1 cm², insbesondere mindestens 4 cm², insbesondere mindestens 9 cm² umfasst.

9. Verkleidungsvorrichtung (2) nach einem der vorhergehenden Ansprüche, **dadurch gekennzeichnet, dass** das Rippenmittel (30) parallel zu einer Kippachse des Festlegemittels (16) verläuft, um die das Festlegemittel (16) beim manuellen Betätigen des Festlegemittels (16) quer oder schräg zur Fügerichtung (18) kippt oder dreht, und/oder dass das Rippenmittel (30) in Fügerichtung (18) rippenartig erstreckt ist.

10. Verkleidungsvorrichtung (2) nach einem der vorhergehenden Ansprüche, **dadurch gekennzeichnet, dass** das Abdeckelement (14), das Spannelement, das Rippenmittel (30) und das Festlegemittel (16) ein gemeinsames einstückiges Bauteil bilden, insbesondere ein Spritzgussteil.

11. Verkleidungsvorrichtung (2) nach Anspruch 10, **dadurch gekennzeichnet, dass** die Abdeckeinheit (12) im Bereich des Übergangs von Abdeckelement (14) auf Festlegemittel (16) eine Materialverdickung und/oder ein Verstärkungsmittel umfasst.

12. Verkleidungsvorrichtung (2) nach einem der vorhergehenden Ansprüche, **dadurch gekennzeichnet, dass** die Abdeckeinheit (12) die äußere Oberfläche des Verkleidungselements (6) mit einem einzigen Abdeckelement (14) oder mit mindestens zwei Abdeckelementen (14) in Gänze oder abschnittsweise überdeckt.

13. Verkleidungsvorrichtung (2) nach Anspruch 12, **dadurch gekennzeichnet, dass** die Abdeckeinheit (12) mindestens ein Koppelmittel (32) umfasst, durch das mindestens zwei aneinander angrenzende Abdeckelemente (14) der mindestens zwei Abdeckelemente (14) aneinander festlegbar sind.

14. Kraftfahrzeug (4) mit einer Tragstruktur (8), mit mindestens einem an der Tragstruktur (8) festgelegten Verkleidungselement (6) und mit mindestens einer Verkleidungsvorrichtung (2) nach einer der Ansprüche 1 bis 13.

## Claims

1. A trim device (2) for a motor vehicle (4), comprising at least one trim element (6), such as a vehicle grille, which is secured to a support structure (8) of the motor vehicle (4), which forms an outer surface of the motor vehicle (4) with its outer surface and which, at least in some regions, comprises at least one through-opening (10) through which air can flow from the outside through the trim element (6) toward the motor vehicle (4), and comprising at least one cover unit (12) comprising at least one cover element (14) having a completely or at least predominantly closed cover surface and which can be applied to the outer surface of the trim element (6), and which comprises at least one fixing means (16) which is or can be fixed to the cover element (14) and which, in a joined end position, has a rear engagement with respect to a joining direction (18) with at least one contact section (20) of the trim element (6) adjacent to the at least one through-opening (10) of the trim element (6). and which comprises at least one actuating section (22) that is accessible from the outside and, by manual actuation of which, the fixing means (16) can be manually moved transversely or obliquely to the joining direction (18) and disengaged from the contact section (20). The cover unit (12) comprises at least one rib means (30) that is fixed to the cover element (14) and to the fixing means (16) on the side facing the cladding element (6).

2. Cladding device (2) according to claim 1, **characterized in that** the fixing means (16) is arranged on the cover element (14) on a side facing the cladding element (6), and that the cover element (14) comprises a recess (24) in the region of the fixing means (16), through which the actuating section (22) is accessible from the outside through the cover element (14).

3. Covering device (2) according to claim 1 or 2, **characterized in that** the securing means (16) extends along its longest extent in the joining direction (18) and/or that the securing means (16) comprises a hook-shaped projection (26) at a free end, which, in the joined final position, abuts the contact section (20) to form the rear grip.

4. Covering device (2) according to one of the preceding claims, **characterized in that** the covering unit (12) comprises at least one clamping element by which the securing means (16) can be clamped into the rear grip position.

5. The cladding device (2) according to claim 4, **characterized in that** the securing means (16) is elastically displaceable, at least during joining along the joining direction (18), transversely or obliquely to the joining direction (18), and/or that the securing means (16) comprises an elastically displaceable material, wherein the clamping means and the securing means (16) comprise a common component, or the clamping means comprises a component that is separate or separable from the securing means (16).

6. The cladding device (2) according to one of the preceding claims, **characterized in that** the covering unit (12) comprises a gripping means spaced apart from the securing means (16) transversely to the joining direction (18), which gripping means is arranged on a side facing away from the cladding element (6) and which can be manually gripped for manually removing the covering element (14) from the cladding element (6) opposite to the joining direction (18).

7. The cladding device (2) according to claim 6, **characterized in that** the gripping means comprises a raised portion on the cover element (14) and/or a recess, in particular a continuous recess, in the cover element (14).

8. The cladding device (2) according to one of the preceding claims, **characterized in that** the actuating portion (22) comprises a recess (28) that is set back transversely or obliquely to the joining direction (16) and extends to the cover element (14), and/or that the recess in the cover element (14) and/or the recess (28) has a cross-section transverse to the joining direction (18) that is at least 1 cm², in particular at least 4 cm², in particular at least 9 cm².

9. The cladding device (2) according to one of the preceding claims, **characterized in that** the rib means (30) runs parallel to a tilting axis of the securing means (16), about which the securing means (16) tilts or rotates transversely or obliquely to the joining direction (18) upon manual actuation of the securing means (16), and/or that the rib means (30) extends in the joining direction (18) in a rib-like manner.

10. The cladding device (2) according to one of the preceding
claims, **characterized in that** the cover element (14), the clamping element, the rib means (30), and the securing means (16) form a common, one-piece component, in particular an injection molded part.

11. The cladding device (2) according to claim 10, **characterized in that** the cover unit (12) in the region of the transition from the cover element (14)

12. A cladding device (2) according to one of the preceding claims, **characterized in that** the covering unit (12) covers the outer surface of the cladding element (6) with a single covering element (14) or with at least two covering elements (14), either entirely or in sections.

13. A cladding device (2) according to claim 12, **characterized in that** the covering unit (12) comprises at least one coupling means (32) by which at least two adjacent covering elements (14) of the at least two covering elements (14) can be secured to one another.

14. A motor vehicle (4) with a supporting structure (8), with at least one cladding element (6) secured to the supporting structure (8), and with at least one cladding device (2) according to one of claims 1 to 13.

## Revendications

1. Dispositif d'habillage (2) pour véhicule automobile (4), comprenant au moins un élément d'habillage (6), tel qu'une calandre, fixé à une structure porteuse (8) du véhicule automobile (4), formant avec sa surface extérieure une surface du véhicule automobile (4) et comportant, au moins par endroits, au moins une ouverture traversante (10) permettant l'écoulement d'air extérieur à travers l'élément d'habillage (6) vers le véhicule automobile (4), et comprenant au moins une unité de recouvrement (12) comprenant au moins un élément de recouvrement (14) présentant une surface de recouvrement entièrement ou au moins majoritairement fermée et pouvant être appliqué sur la surface extérieure de l'élément d'habillage (6), et comprenant au moins un moyen de fixation (16) fixé ou pouvant être fixé à l'élément de recouvrement (14) et qui, en position d'extrémité assemblée, présente un engagement arrière par rapport à une direction d'assemblage (18) avec au moins une section de contact (20) de l'élément d'habillage (6) adjacente à l'ouverture traversante (10) de l'élément d'habillage. (6). et qui comprend au moins une section d'actionnement (22) accessible de l'extérieur et permettant, par actionnement manuel, de déplacer le moyen de fixation (16) transversalement ou obliquement à la direction de jonction (18) et de le dégager de la section de contact (20). L'unité de recouvrement (12) comprend au moins une nervure (30) fixée à l'élément de recouvrement (14) et au moyen de fixation (16) du côté tourné vers l'élément de revêtement (6).

2. Dispositif de revêtement (2) selon la revendication 1, **caractérisé en ce que** le moyen de fixation (16) est disposé sur l'élément de recouvrement (14) du côté tourné vers l'élément de revêtement (6), et **en ce que** l'élément de recouvrement (14) comprend un évidement (24) au niveau du moyen de fixation (16), par lequel la section d'actionnement (22) est accessible de l'extérieur à travers l'élément de recouvrement (14).

3. Dispositif de recouvrement (2) selon la revendication 1 ou 2, **caractérisé en ce que** le moyen de fixation (16) s'étend sur sa plus grande longueur dans la direction d'assemblage (18) et/ou **en ce que** le moyen de fixation (16) comporte à son extrémité libre une saillie en forme de crochet (26) qui, en position finale d'assemblage, vient en butée contre la section de contact (20) pour former la poignée arrière.

4. Dispositif de recouvrement (2) selon l'une des revendications précédentes, **caractérisé en ce que** l'unité de recouvrement (12) comprend au moins un élément de serrage permettant de serrer le moyen de fixation (16) en position de poignée arrière.

5. Dispositif de revêtement (2) selon la revendication 4, **caractérisé en ce que** le moyen de fixation (16) est déplaçable élastiquement, au moins lors de l'assemblage le long de la direction d'assemblage (18), transversalement ou obliquement à cette direction, et/ou **en ce que** le moyen de fixation (16) est constitué d'un matériau déplaçable élastiquement, le moyen de serrage et le moyen de fixation (16) étant constitués d'un composant commun, ou le moyen de serrage étant constitué d'un composant distinct ou séparable du moyen de fixation (16).

6. Dispositif de revêtement (2) selon l'une des revendications précédentes, **caractérisé en ce que** l'unité de recouvrement (12) comprend un moyen de préhension espacé du moyen de fixation (16) transversalement à la direction d'assemblage (18), lequel moyen de préhension est disposé sur un côté opposé à l'élément de revêtement (6) et peut être saisi manuellement pour retirer l'élément de recouvrement (14) de l'élément de revêtement (6) opposé à la direction d'assemblage (18).

7. Dispositif de revêtement (2) selon la revendication 6, **caractérisé en ce que** le moyen de préhension comprend une partie surélevée sur l'élément de recouvrement (14) et/ou un évidement, notamment continu, dans l'élément de recouvrement (14).

8. Dispositif de
revêtement (2) selon l'une des revendications précédentes, **caractérisé en ce que** la partie d'actionnement (22) comprend un évidement (28) en retrait transversal ou oblique par rapport à la direction d'assemblage (16) et s'étendant jusqu'à l'élément de recouvrement (14), et/ou **en ce que** l'évidement dans l'élément de recouvrement (14) et/ou l'évidement (28) présentent une section transversale à la direction d'assemblage (18) d'au moins 1 cm², notamment d'au moins 4 cm², notamment d'au moins 9 cm².

9. Dispositif de revêtement (2) selon l'une des revendications précédentes, **caractérisé en ce que** les nervures (30) s'étendent parallèlement à un axe d'inclinaison du moyen de fixation (16), autour duquel ce dernier bascule ou pivote transversalement ou obliquement par rapport à la direction d'assemblage (18) lors d'un actionnement manuel du moyen de fixation (16), et/ou **en ce que** les nervures (30) s'étendent dans la direction d'assemblage (18) à la manière d'une nervure.

10. Dispositif de revêtement (2) selon l'une des revendications précédentes, **caractérisé en ce que** l'élément de recouvrement (14), l'élément de serrage, les nervures (30) et le moyen de fixation (16) forment une pièce monobloc commune, notamment moulée par injection.

11. Dispositif de revêtement (2) selon la revendication 10, **caractérisé en ce que** l'unité de recouvrement (12) est située dans la zone de transition avec l'élément de recouvrement (14).

12. Dispositif d'habillage (2) selon l'une des revendications précédentes, **caractérisé en ce que** l'unité de recouvrement (12) recouvre la surface extérieure de l'élément d'habillage (6) avec un seul élément d'habillage (14) ou avec au moins deux éléments d'habillage (14), entièrement ou par sections.

13. Dispositif d'habillage (2) selon la revendication 12, **caractérisé en ce que** l'unité de recouvrement (12) comprend au moins un moyen d'accouplement (32) permettant de fixer ensemble au moins deux éléments d'habillage adjacents (14).

14. Véhicule automobile (4) comportant une structure porteuse (8), au moins un élément d'habillage (6) fixé à la structure porteuse (8), et au moins un dispositif d'habillage (2) selon l'une des revendications 1 à 13.
